# EUROPÄISCHE PATENTSCHRIFT

(11) **EP 1 151 338 B1**
(45) Veröffentlichungstag und Bekanntmachung des Hinweises auf die Patenterteilung: **01.10.2003**
(21) Anmeldenummer: 99902486.2
(22) Anmeldetag: 12.02.1999
(51) Int. Cl.: G02B 6/38

(54) **OPTISCHER STECKVERBINDER**
OPTICAL CONNECTOR
CONNECTEUR OPTIQUE ENFICHABLE

(43) Veröffentlichungstag der Anmeldung: 07.11.2001
(73) Patentinhaber: HUBER & SUHNER AG, 9100 Herisau (CH)
(72) Erfinder: SCHMALZIGAUG, Thomas, CH-9016 St. Gallen (CH); KOCH, Beat, CH-9205 Waldkirch (CH)
(74) Vertreter: Isler & Pedrazzini AG
(86) Internationale Anmeldenummer: CH9900064
(87) Internationale Veröffentlichungsnummer: WO00048030

(56) Entgegenhaltungen:
- EP-B- 0 430 107
- DE-C- 19 619 374

## Beschreibung

### TECHNISCHES GEBIET

Die vorliegende Erfindung bezieht sich auf das Gebiet der Technik der Lichtwellenleiter (LWL). Sie betrifft einen optischen Steckverbinder zum lösbaren Verbinden einer Schaltungsplatte ("board") mit einer Montagerückwand ("backplane") gemäss dem Oberbegriff des Anspruchs 1.

Ein solcher Steckverbinder ist z.B. aus der Druckschrift DE-C1-196 19 374 bekannt.

### STAND DER TECHNIK

Bei der Zusammenfassung von einzelnen Schaltungsplatten ("boards") zu einem Gesamtsystem, bei welchem die Schaltungsplatten einzeln steckbar ausgeführt sind und durch Einstecken in eine Montagerückwand ("backplane") untereinander oder mit Signalein- oder ausgängen funktionell verbunden werden, werden zunehmend auch faseroptische Steckverbindungen bzw. Steckverbinder für Lichtwellenleiter benötigt, mittels derer neben den elektrischen auch optische Signale zwischen den einzelnen Schaltungsplatten und der Montagerückwand ausgetauscht werden können. Da bei derartigen faseroptischen Steckverbindungen definierte Anpresskräfte der aneinanderstossenden Faserendflächen eingehalten werden müssen, treten, insbesondere wenn beim Steckverbinder pro Schaltungsplatte gleichzeitig eine Mehrzahl von faseroptischen Einzelverbindungen hergestellt werden müssen, vergleichsweise hohe Einsteckkräfte auf, die, wenn nicht besondere Massnahmen getroffen werden, auf die Montagerückwand einwirken und dort Deformationen hervorrufen, die dann einzelne Verbindungen untauglich machen. Weiterhin ist es notwendig, dass bei mehreren Steckern pro Schaltungsplatte die zwangsläufig vorhandenen Längenunterschiede ausgeglichen werden können. Gleichzeitig muss aber auch dafür gesorgt werden, dass die Verbindung nach dem Zusammenstecken gegen ein Auseinanderfahren von Stecker und Buchse gesichert ist.

In der Druckschrift EP-B1-0 430 107, insbesondere in den dortigen Figuren 3(a) bis 3(j) und den zugehörigen Teilen der Beschreibung ist bereits ein faseroptischer Steckverbinder vorgeschlagen worden, bei dem auf der Buchsenseite ein inneres Gehäuse (36) in einem äusseren Gehäuse (34) in der Einsteckrichtung verschiebbar gelagert ist. Im ausgesteckten Zustand wird das innere Gehäuse durch einen ersten Verriegelungsmechanismus in Form einer ersten Schnapplasche oder Einrastzunge (38) und einer ersten Raststufe (37) an einer Bewegung relativ zum äusseren Gehäuse gehindert. Auf der Steckerseite ist ein Entriegelungselement (41) angeordnet, dass beim Einstecken des Steckers in die Buchse den ersten Verriegelungsmechanismus entriegelt und so nach dem Einstecken für eine freie Verschiebbarkeit der Steckverbindung innerhalb des äusseren Gehäuses sorgt. Der erste Verriegelungsmechanismus und das zugehörige Entriegelungselement sind seitlich auf der einen Seite des Steckverbinders untergebracht.

Ein zweiter Verriegelungsmechanismus, der eine am Stecker angeordnete zweite Schnapplasche (40) und eine am inneren Gehäuse angeordnete, zugehörige zweite Raststufe (39) umfasst, bewirkt, dass der Stecker beim Einstecken in die Buchse mit dem inneren Gehäuse verrastet wird und sich zusammen mit dem inneren Gehäuse relativ zum äusseren Gehäuse in Steckrichtung bewegen kann. Der zweite Verriegelungsmechanismus ist ebenfalls seitlich, jedoch auf der anderen Seite des Steckverbinders, angeordnet. Der Stecker ist in diesem Fall fest mit der Montagerückwand verbunden, während das äussere Gehäuse des Buchsenteils fest auf der Schaltungsplatte montiert ist.

Die beiden seitlich angeordneten, und unabhängig voneinander wirkenden Verriegelungsmechanismen haben jedoch verschiedene Nachteile: Für den ordnungsgemässen Ablauf des Einsteckvorgangs ist es wichtig, dass die beiden Verriegelungsmechanismen in einer bestimmten Reihenfolge betätigt (verriegelt bzw. entriegelt) werden, wie dies in den Fig. 3(a) bis 3(j) der eingangs genannten Druckschrift detailliert dargestellt ist. Da die beiden Verriegelungsmechanismen jedoch auf gegenüberliegenden Seiten des Steckverbinders angeordnet sind und unabhängig voneinander funktionieren, besteht die Gefahr, dass beim Einstecken durch ein Verkanten des Steckers die ordnungsgemässe Reihenfolge der Betätigung nicht mehr gewährleistet ist.

Besonders ungünstig ist jedoch die beidseitige Anordnung der Verriegelungsmechanismen im Hinblick auf einen flexiblen modularen Einsatz des Steckverbinders mit einer frei wählbaren Anzahl von faseroptischen Einzelverbindungen, weil eine seitliche Erweiterbarkeit in einem fest vorgegebenen Rastermass nicht möglich ist.

Aus der eingangs genannten Druckschrift DE-C1-196 19 374 ist weiterhin eine Steckverbindung für Lichtwellenleiter, die gemeinsam mit elektrischen Steckverbindungen auf einer in ein Gestell einschiebbaren Leiterplatte angeordnet sind, bekannt, bei der die durch die elektrischen Steckverbindungen vorgegebenen Toleranzen dadurch ausgeglichen werden, dass die in dem Gestell angeordnete Steckverbindungshälfte für Lichtwellenleiter ein in einem Trägerkörper gehaltenes und verrastetes Steckteil aufweist. Beim Zusammenfügen der Steckverbindungshälften wird diese Verrastung gelöst und es erfolgt stattdessen eine Verrastung mit der zweiten Steckverbindungshälfte der Leiterplatte, wobei durch die gelöste Verrastung mit dem Trägerkörper das Steckteil darin verschiebbar gehalten ist.

Die lösbaren Verrastungen erfolgen dabei durch ein Zusammenspiel zwischen zwei am Steckteil einstückig angeformten Federarmen (9), deren vordere Enden mit Schrägen und Rastschultern versehen sind, und zwei an einem auf der Leiterplatte befestigten Halteteil angeformten (starren) Rastarmen (28). Ein solcher Verrastungs- und Entrastungsmechanismus erfordert jedoch einen komplizierten Bewegungsablauf beim Einstecken und entsprechend eine komplexe Ausgestaltung der Geometrie und Anordnung der einzelnen Rastelemente.

### DARSTELLUNG DER ERFINDUNG

Es ist daher Aufgabe der Erfindung, einen optischen Steckverbinder zu schaffen, der die Nachteile der bekannten Steckverbinder vermeidet und insbesondere bei einem kompakten und vereinfachten Aufbau eine synchronisierte Betätigung der Verriegelungsmechanismen sicherstellt und eine modulare und flexible Konfektionierung im Hinblick auf die einzelnen Faserverbindungen ermöglicht

Die Aufgabe wird durch die Gesamtheit der Merkmale des Anspruchs 1 gelöst Der Kern der Erfindung besteht darin, dass die ersten Verriegelungsmittel eine am Innengehäuse angebrachte erste Schnapplasche umfassen, welche sich in Steckrichtung erstreckt und im verriegelten Zustand hinter einen am Aussengehäuse angeordneten ersten Verriegelungsabsatz einschnappt, dass die Buchse ein Aussengehäuse und ein Innengehäuse umfasst, welches Innengehäuse in dem Aussengehäuse in Steckrichtung verschiebbar gelagert und mittels der ersten Verriegelungsmittel gegen ein Verschieben innerhalb des Aussengehäuses gesichert ist, dass der wenigstens eine Stecker einen Körper mit einem Einsteckteil umfasst, dass die zweiten Verriegelungsmittel eine an dem Körper angebrachte zweite Schnapplasche umfassen, welche sich in Steckrichtung erstreckt und im verriegelten Zustand hinter einen am Innengehäuse der Buchse angeordneten zweiten Verriegelungsabsatz einschnappt, und dass die beiden Schnapplaschen so ausgebildet und einander zugeordnet sind, dass die zweite Schnapplasche beim Einstecken des Steckers zunächst hinter dem zweiten Verriegelungsabsatz einschnappt und anschliessend die erste Schnapplasche über den ersten Verriegelungsabsatz anhebt und entriegelt.

Die erfindungsgemässe Lösung zeichnet sich durch einfachen Aufbau und Funktionssicherheit aus und ist mit Mitteln der Spritzgusstechnik günstig herzustellen. Die zweiten Verriegelungsmittel, welche zur gegenseitigen Verriegelung von Stecker und Buchse vorgesehen sind, werden zugleich für die Entriegelung der ersten Verriegelungsmittel eingesetzt, welche bei der Buchse das Innengehäuse im Aussengehäuse verriegeln. Hierdurch wird eine Zwangssynchronisation der beiden Entriegelungs- bzw. Verriegelungsvorgänge erreicht. Zugleich sind beide Verriegelungsmechanismen kompakt auf derselben Seite angeordnet, so dass die gegenüberliegende Seite frei verfügbar ist und keinen Einschränkungen unterliegt. Es versteht sich dabei von selbst, dass dabei ohne Aenderung in der Wirkung entweder bei der Buchse das Innengehäuse in dem Aussengehäuse verschiebbar ausgebildet sein kann, oder beim Stecker.

Besonders vorteilhaft ist es, wenn gemäss einer ersten bevorzugten Ausführungsform der Erfindung die ersten und zweiten Verriegelungsmittel auf der der Schaltungsplatte zu- oder abgewandten Seite des Steckverbinders angeordnet sind. Hierdurch bestehen seitlich auf beiden Seiten des Steckverbinders keinerlei Einschränkungen im Hinblick auf die platzsparende Aneinanderreihung einer Mehrzahl von Steckverbindern. Darüber hinaus können auf diese Weise die Verriegelungsmittel sehr nahe an der Längsachse des Steckverbinders angebracht werden, so dass die von den Lichtwellenleiterenden herrührenden Anpresskräfte, die auf der Längsachse angreifen, nur ein kleines Kippmoment ergeben, das keine Verkeilung hervorruft.

Eine sichere und reibungsarme Wechselwirkung zwischen den beiden Schnapplaschen wird gemäss einer anderen bevorzugten Ausführungsform der Erfindung dadurch erreicht, dass die beiden Schnapplaschen an ihren freien Enden zueinander parallel verlaufende Anschrägungen aufweisen, welche beim Aufeinandertreffen der Schnapplaschen beim Einstecken des Steckers eine Auslenkung der ersten Schnapplasche quer zur Steckrichtung bewirken.

Zum Verriegeln und Entriegeln der zweiten Schnapplasche ist auf der Höhe des zweiten Verriegelungsabsatzes am Aussengehäuse vorzugsweise eine Steuerbahn vorgesehen, auf welcher die zweite Schnapplasche mit ihrem freien Ende beim Einstecken und Herausziehen des Steckers entlanggleitet und über den zweiten Verriegelungsabsatz gehoben wird, wobei zum Abtasten der Steuerbahn am freien Ende der zweiten Schnapplasche seitliche Ohren angebracht sind.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Ansicht ein bevorzugtes Ausführungsbeispiel eines optischen Steckverbinders nach der Erfindung zur Verbindung von vier faseroptischen Kabeln im eingesteckten Zustand;
- Fig. 2: in einer teilweise geschnittenen, der grösseren Uebersichtlichkeit wegen vereinfachten Seitenansicht ein Steckverbinder gemäss Fig. 1 vor dem Zusammenstecken;
- Fig. 3: den Steckverbinder aus Fig. 2 in einer ersten Einsteckphase, in welcher die steckerseitige Schnapplasche die Steuerbahn am Aussengehäuse der Buchse abtastet und angehoben wird,
- Fig. 4: den Steckverbinder aus Fig. 2 in einer zweiten Einsteckphase, in welcher die steckerseitige Schnapplasche hinter dem Verriegelungsabsatz am Innengehäuse der Buchse einrastet und Buchse und Stecker miteinander verriegelt;
- Fig. 5: den Steckverbinder aus Fig. 2 in einer dritten Einsteckphase, in welcher die steckerseitige Schnapplasche die buchsenseitige Schnapplasche aus der Einrastposition anhebt;
- Fig. 6: den Steckverbinder aus Fig. 2 nach Beendigung des Einsteckvorgangs, wobei die Verriegelung zwischen Innengehäuse und Aussengehäuse aufgehoben ist, und
- Fig. 7: den Querschnitt durch einen Steckverbinder gemäss Fig. 4 in der dort eingezeichneten Ebene A-A (durchgezogene Linien) sowie in einer platzsparenden Aneinanderreihung zwei benachbarte identische Steckverbinder (strichpunktierte Linien).

### WEGE ZUR AUSFÜHRUNG DER ERFINDUNG

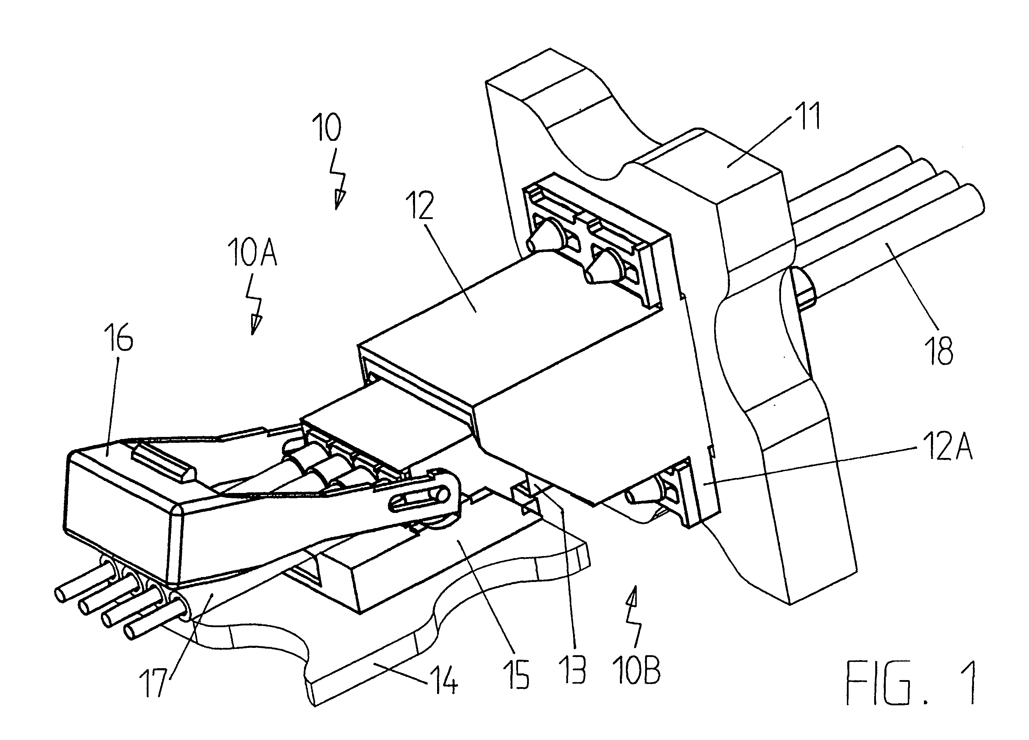

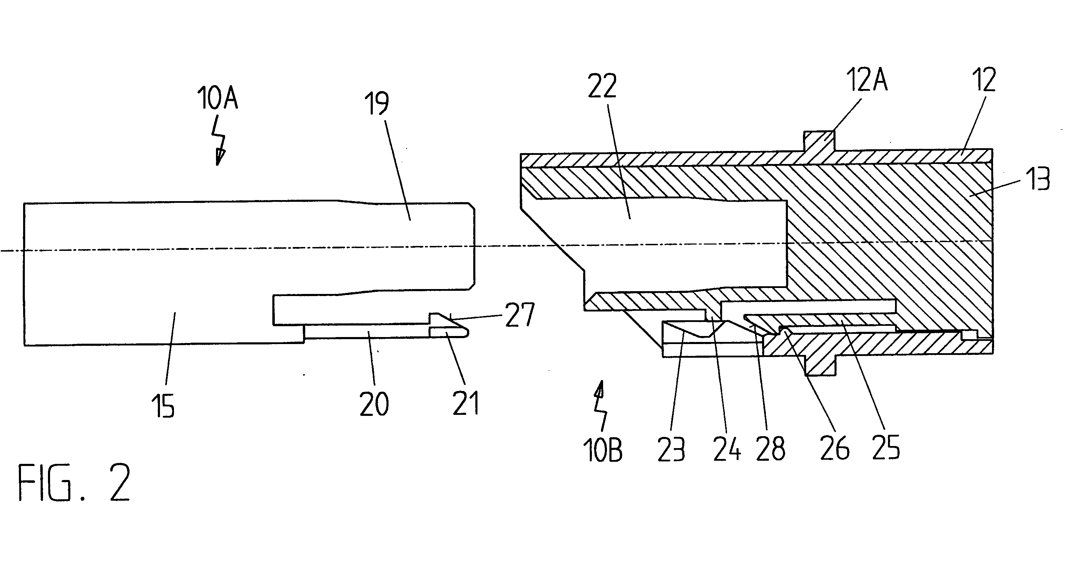

In Fig. 1 ist in einer perspektivischen Ansicht ein bevorzugtes Ausführungsbeispiel eines optischen Steckverbinders nach der Erfindung im eingesteckten Zustand dargestellt. Der Steckverbinder 10 verbindet im vorliegenden Beispiel lösbar vier nebeneinander angeordnete faseroptische Kabel 17 einer Schaltungsplatte ("board") 14 mit vier entsprechenden optischen Kabeln 18, die von einer Montagerückwand ("backplane") 11 nach aussen wegführen. Die Schaltungsplatte 14 ist dabei rechtwinklig zur Montagerückwand 11 orientiert. Der Steckverbinder 10 umfasst einen auf der Schaltungsplatte 11 am Rande fest montierten Stecker 10A und eine zum Stecker passende Buchse 10B mit einem Innengehäuse 13, welches in einem Aussengehäuse 12 in Steckrichtung verschiebbar gelagert ist. Das Aussengehäuse 12 ist dabei mittels eines Flansches 12A in einer Oeffnung in der Montagerückwand 11 befestigt (z.B. verschraubt). Der Stecker 10A hat einen Körper 15, der - wie aus Fig. 2 zu entnehmen ist - am einen Ende in ein Einsteckteil 19 übergeht. Mit diesem Einsteckteil 19 steckt er in einer Einstecköffnung 22 (Fig. 2) der Buchse 10B. Der Stecker 10A und die darin befindlichen Enden der faseroptischen Kabel 17 können durch eine Schutzklappe 16, die am Körper 15 schwenkbar gelagert ist und vor dem Einstecken nach hinten zurückgeschwenkt wird, vor Verschmutzung oder Beschädigung geschützt und gegen ein unbeabsichtigtes Austreten von Strahlung gesichert werden.

Nicht sichtbar sind in Fig. 1 die innerhalb des Steckverbinders 10 angeordneten Verriegelungsmittel, deren bevorzugte Ausgestaltung und Funktionsweise nachfolgend anhand der Fig. 2 bis 6, welche sich auf verschiedene Phasen des Einsteckvorgangs beziehen, erläutert werden soll. Fig. 2 zeigt dabei den Steckverbinder aus Fig. 1 in einer vereinfachten, teilweise geschnittenen Seitenansicht vor dem Zusammenstecken. Die faseroptischen Kabel und die Einzelheiten der optischen Verbindung zwischen den Kabeln sind dabei aus Gründen der Uebersichtlichkeit weggelassen.

Auf der Seite des Steckers 10A sind Verriegelungsmittel vorgesehen, die zur Verriegelung zwischen dem Körper 15 und dem Innengehäuse 13 dienen und eine Schnapplasche 20 umfassen. Die Schnapplasche 20 ist in einem Abstand unterhalb des Einsteckteils 19 angeordnet: Sie ist vorzugsweise am Körper 15 des Steckers 10A angeformt und erstreckt sich in Steckrichtung, d.h., parallel zum Einsteckteil 19. Sie ist gleich lang wie oder etwas kürzer als der Einsteckteil 19, so dass sie durch den Einsteckteil 19 vor mechanischer Beschädigung weitgehend geschützt ist. Durch ihre zungenartige Ausgestaltung ist die Schnapplasche 20 quer zur Steckrichtung elastisch auslenkbar und kann mit ihrem hakenförmig ausgebildeten freien Ende hinter einen dafür vorgesehenen Verriegelungsabsatz 24 am Innengehäuse 13 der Buchse einschnappen. Die für die Verriegelung notwendige Auslenkbarkeit der Schnapplasche 20 nach unten ist dadurch gewährleistet, dass der Stecker 10A mit seinem Körper 15 so am Rand der Schaltungsplatte 14 befestigt ist, dass Einsteckteil 19 und Schnapplasche 20 frei über den Plattenrand hinausstehen.

Auf der Seite der Buchse 10A sind weitere Verriegelungsmittel vorgesehen, die zur Verriegelung zwischen dem Innengehäuse 13 und dem Aussengehäuse 12 dienen und eine weitere Schnapplasche 25 und einen dazugehörigen Verriegelungsabsatz 26 umfassen. Die Schnapplasche 25 ist auf der Unterseite des Innengehäuses 13 angeformt und erstreckt sich in Steckrichtung in einem Abstand unterhalb des verjüngten Vorderteils des Innengehäuses 13. Der Verriegelungsabsatz 26, hinter welchem die Schnapplasche 25 mit ihrem hakenförmigen freien Ende einschnappen kann, ist an der unteren Innenwand des Aussengehäuses 12 angeformt. Der Abstand der Schnapplasche 25 von der Unterseite des Innengehäuses 13 ist dabei so gewählt, dass die zungenförmig ausgebildete und quer zur Steckrichtung elastisch auslenkbare Schnapplasche 25 genügend weit nach oben auslenkbar ist, um mit dem hakenförmigen Ende vom Verriegelungsabsatz 26 freizukommen. In dem in Fig. 2 dargestellten Zustand sind die beiden Gehäuse 12 und 13 durch die Schnapplasche 25 untereinander verriegelt, d.h., das an sich im Aussengehäuse 12 verschiebbare Innengehäuse 13 kann nicht nach hinten ( in Fig. 2 nach rechts) verschoben werden.

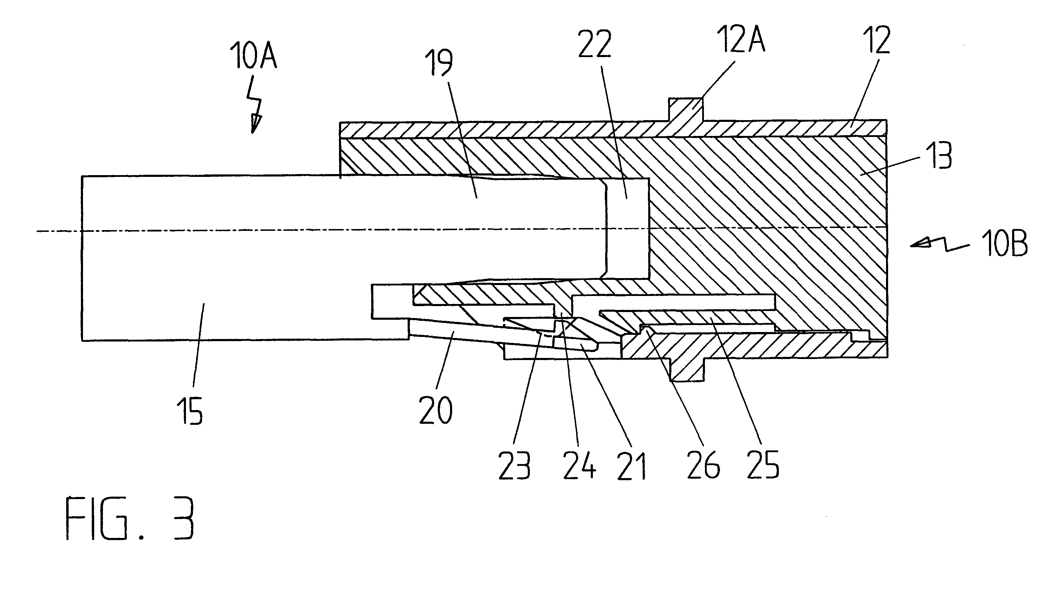

Der Einsteckvorgang beginnt gemäss Fig. 3 mit einer ersten Phase, in welcher der Stecker 10A mit den Einsteckteil 19 in die Einstecköffnung der Buchse so weit eingeführt wird, dass sich die Schnapplasche 20 mit ihrem hakenförmigen Ende über den Verriegelungsabsatz 24 hinwegbewegt. Die Schnapplasche 20 wird dabei nach unten soweit ausgelenkt, dass sich Schnapplasche 20 und Verriegelungsabsatz 24 praktisch nicht berühren. Dies wird erreicht durch eine oder mehrere entsprechend geformte (trapezförmige) Steuerbahnen 23, die am Aussengehäuse 12 auf der Höhe des Verriegelungsabsatzes 24 ausgebildet sind und von der Schnapplasche 20 mit an ihrem hakenförmigen Ende angeordneten, seitlich herausstehenden Ohren 21 beim Einstecken abgetastet werden.

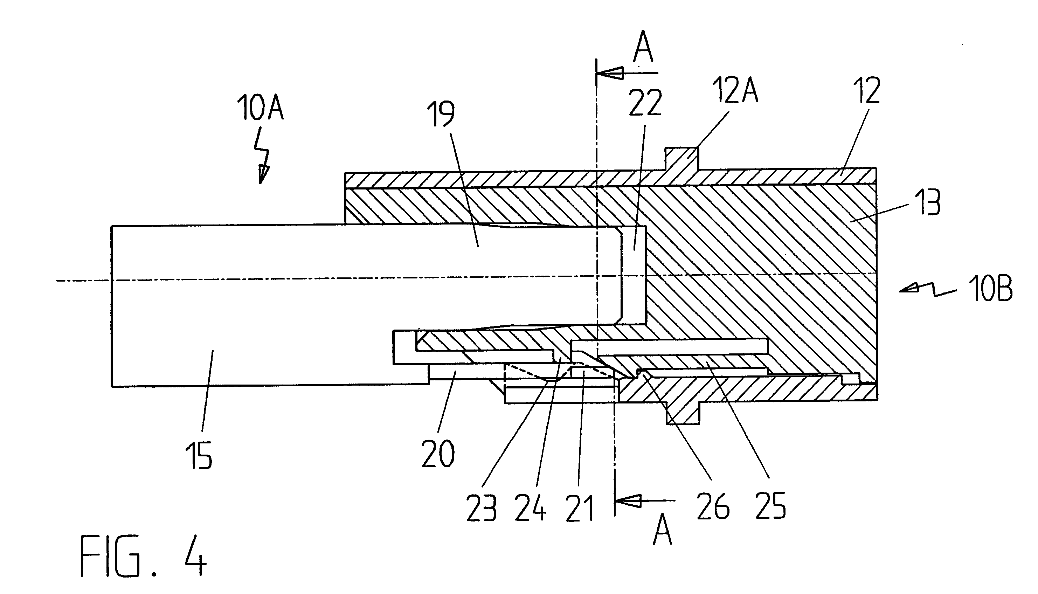

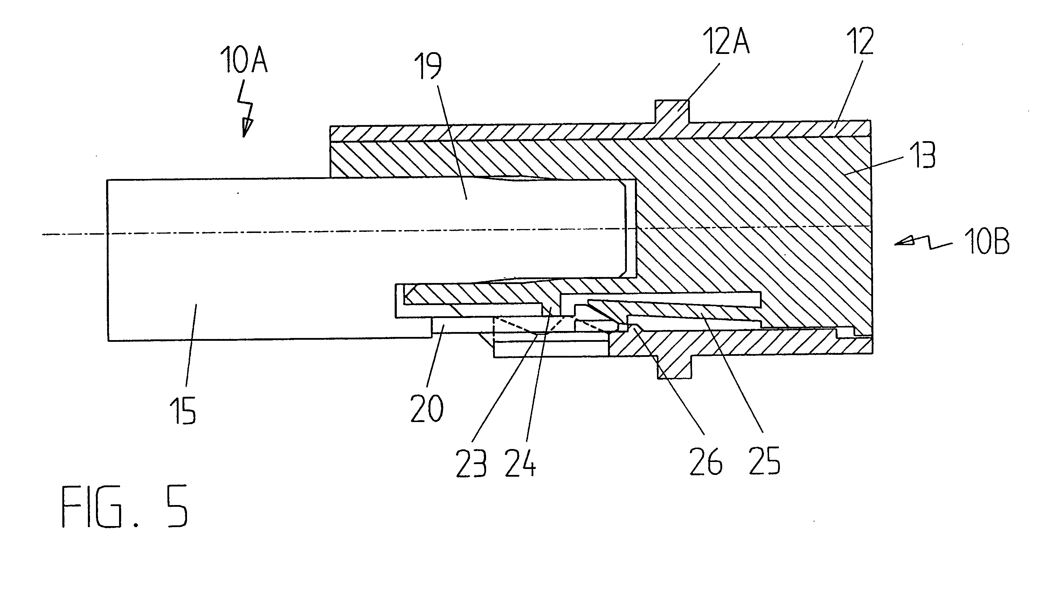

Wird der Stecker 10A noch weiter eingesteckt (Fig. 4), kehrt die Schnapplasche 20 auf der ansteigenden Schräge der Steuerbahn 23 aufgrund der elastischen Rückstellkräfte in ihre Ruhelage zurück und schnappt so hinter dem Verriegelungsabsatz 24 ein. In diesem Zwischenzustand sind nun sowohl der Stecker 10A und die Buchse 10B miteinander verriegelt, als auch das Innengehäuse 13 und das Aussengehäuse 12; ebenso funktioniert bereits die Verbindung zwischen den Lichtwellenleitern. Wie in Fig. 4 zu erkennen ist, sind die Verriegelungsabsätze 24 und 26 und die beiden Schnapplaschen 20 und 25 so ausgeformt und zueinander angeordnet, dass unmittelbar nach dem Einschnappen der Schnapplasche 20 hinter dem Verriegelungsabsatz 24 diese Schnapplasche mit ihrer Stirnseite auf die Stirnseite der anderen Schnapplasche 25 trifft. Da die beiden Schnapplaschen 20, 25 an ihren freien Enden (Stirnseiten) zueinander parallel verlaufende Anschrägungen 27, 28 (Fig. 2) aufweisen, wird beim weiteren Einstecken des Steckers 10A die Schnapplasche 25 quer zur Steckrichtung nach oben ausgelenkt, während sich die Schnapplasche 20 auf der angrenzenden unteren Innenwand des Aussengehäuses 12 nach unten abstützt und dadurch nicht ausgelenkt wird. Auf diese Weise wird die Schnapplasche 25 durch die Schnapplasche 20 über den Verriegelungsabsatz 26 angehoben und entriegelt (Fig. 5).

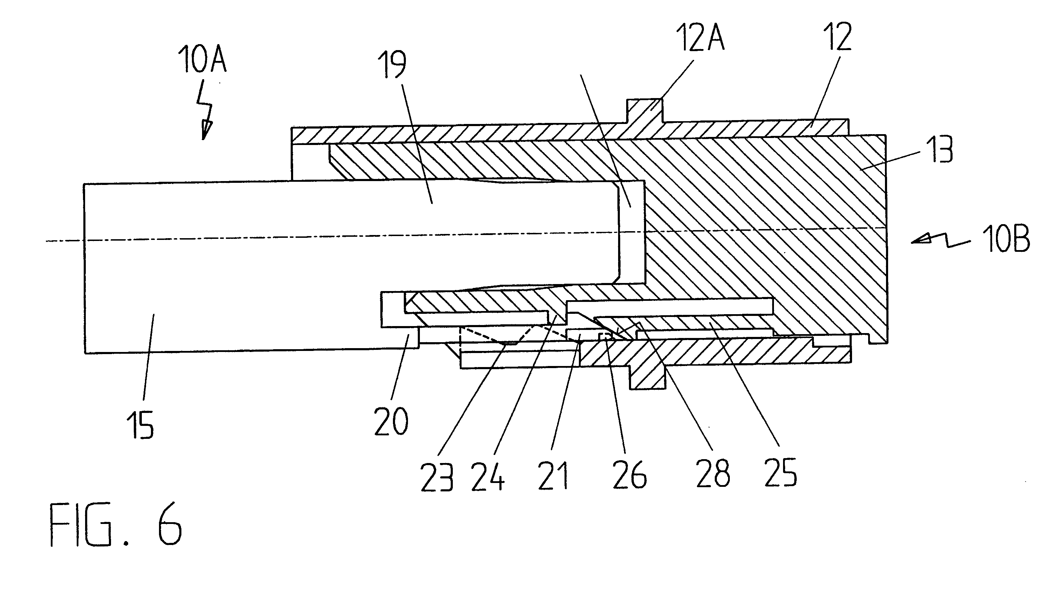

Im vollständig eingesteckten Zustand (Fig. 6) ist durch die Entriegelung der Schnapplasche 25 das Innengehäuse 13 im Aussengehäuse 12 in Steckrichtung frei verschiebbar, während der Stecker 10A mit der Buchse 10B bzw. deren Innengehäuse 13 verriegelt ist. Stecker 10A und Innengehäuse 13 der Buchse 10B können so gemeinsam im Aussengehäuse 12 verschoben werden ("floaten").

Der Aussteckvorgang verläuft umgekehrt: Wenn - ausgehend vom Zustand in Fig. 6 - der Stecker 10A zusammen mit dem Innengehäuse 13 der Buchse 10B im Aussengehäuse 12 nach links verschoben wird, gleitet die Schnapplasche 25 mit ihrer Anschrägung 28 über den (auf dieser Seite ebenfalls angeschrägten) Verriegelungsabsatz 26 und schnappt dahinter ein. Wird der Aussteckvorgang fortgesetzt, tasten die seitlichen Ohren 21 der Schnapplasche 20 die Steuerbahn 23 in umgekehrter Richtung ab, so dass diese Schnapplasche 20 über den Verriegelungsabsatz 24 gehoben wird und frei kommt. Der Stecker 10A kann dann aus der Einstecköffnung 22 problemlos herausgezogen werden.

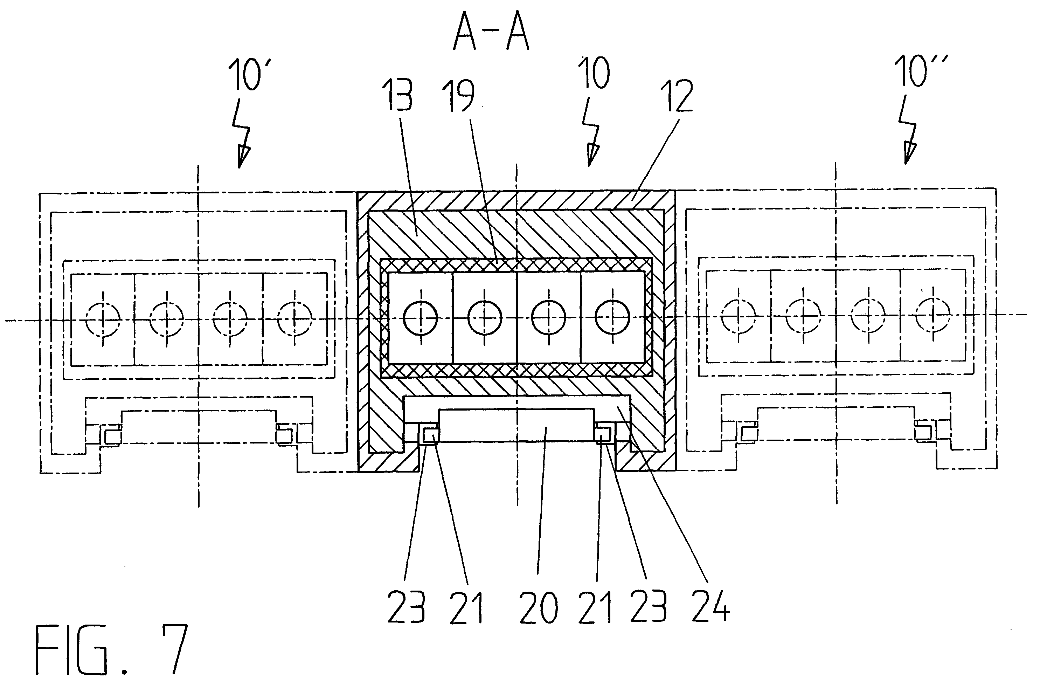

Die Kompaktheit der Verriegelungsmittel der erfindungsgemässen Lösung wird besonders an der Darstellung der Fig. 7 deutlich, die einen Querschnitt durch den Steckverbinder 10 der Fig. 4 in der Ebene A-A und zwei auf beiden Seiten benachbarte, unmittelbar angrenzende, identische Steckverbinder 10' und 10" zeigt. Es ist sofort zu erkennen, dass die auf der Unterseite der Steckverbinder 10, 10' und 10" angeordneten, funktionell zusammenwirkenden Verriegelungsmechanismen, von denen in Fig. 7 nur die steckerseitige Schnapplasche 20 mit den seitlichen Ohren 21, der Verriegelungsabsatz 24 und die Steuerbahnen 23 zu sehen sind, eine sehr schmale und flache Bauweise der Steckverbinder ermöglichen. Der Raum seitlich und oben ist frei für die eigentlichen Elemente der Lichtwellenleiterenden und für weitere Funktionen wie z.B. eine geöffnete Staubschutzklappe. Der seitliche Raum wird insbesondere für die Elemente der Lichtwellenleiterenden benötigt, da mit steigendem Bedarf der Faseranzahl möglichst viele Elemente entlang der Schaltungsplatte integriert werden sollen. Die Steckverbinder (10, 10' und 10" in Fig. 7) können somit ohne Zwischenabstand und ohne grossen Platzverlust zwischen den einzelnen optischen Verbindungen aneinandergereiht werden. Die Anreihbarkeit ist insbesondere wichtig, wenn neben den optischen Verbindern elektrische (NF oder HF) Steckverbinder, z.B. nach dem Metral-System, montiert werden. Die Breite des optischen Steckverbinders entspricht der Breite des kleinsten Moduls der elektrischen Steckverbinder. Durch diese Modulbildung ist eine flexible Anreihbarkeit von elektrischen (NF oder HF) und optischen Steckverbindem gewährleistet.

Einen weiteren Vorteil bringt die Plazierung der Verriegelungsmittel gemäss Fig. 7 in der senkrechten Mittelebene direkt unterhalb der Längsachse des Steckverbinders. Die Verriegelungsmittel befinden sich so sehr nahe an der Längsachse des Steckers bzw. der Buchse. Damit ist gewährleistet, dass die von den Elementen der Lichtwellenleiterenden herrührenden Anpresskräfte (Angriffsort auf der Längsachse) nur ein kleines Kippmoment ergeben, das keine Verkeilung beim Steckvorgang hervorruft.

Während anhand der Figuren oben ein Ausführungsbeispiel beschrieben worden ist, bei welchem die Kraftfreiheit zwischen der Schaltungsplatte und der Montagerückwand durch ein im Aussengehäuse verschiebbar gelagertes Innengehäuse hergestellt wird, welches auf der Buchsenseite angeordnet ist, können im Rahmen der Erfindung statt dessen Aussengehäuse und verschiebbares Innengehäuse mit demselben Effekt auch auf der Steckerseite angeordnet werden, wobei die Verriegelungsmittel entsprechend versetzt werden.

Die erfindungsgemässe Lösung hat insgesamt folgende Besonderheiten bzw. Vorteile:
- Nur während dem Einstecken wird eine Kraft zwischen der Schaltungsplatte ("board") und der Montagerückwand ("backplane") benötigt. Nach dem Verriegeln der zweiten Verriegelungsmittel bzw. nach dem Entriegeln der ersten Verriegelungsmittel besteht nach dem Einstecken Kraftfreiheit. Dadurch wird eine Deformation der Schaltungsplatte und der Montagerückwand vermieden.
- Die flache Bauweise der Verriegelungsmittel ermöglicht, dass die Verriegelungsmittel nur einseitig, aber sehr nahe an der Längsachse des Steckers bzw. der Buchse angebracht werden können. Die von den Elementen der Lichtwellenleiterenden herrührenden Anpresskräfte (Angriffsort auf der Längsachse) ergeben somit ein nur kleines Kippmoment, das keine Verkeilung hervorruft.
- Die einseitige Anordnung der Verriegelungsmittel hält den Raum seitlich und oben frei für die eigentlichen Elemente der Lichtwellenleiterenden und für weitere Funktionen. Der seitlichen Raum wird für die Elemente der Lichtwellenleiterenden benötigt, da mit steigendem Bedarf der Faseranzahl möglichst viele Elemente entlang der Schaltungsplatte integriert werden sollen. Die Steckverbinder können somit ohne Zwischenabstand und ohne grossen Platzverlust zwischen den einzelnen optischen Verbindungen aneinandergereiht werden.
- Die Breite des optischen Steckverbinders entspricht der Breite des kleinsten Moduls der elektrischen Steckverbinder. Durch die gleiche Modularität zu den elektrischen (NF oder HF) Steckverbindern, wie z.B. Metral-Steckverbinder, können die optischen und elektrischen Steckverbinder beliebig und damit flexibel aneinandergereiht werden.
- Innerhalb dieses Systems können flexibel 1 bis beispielsweise 4 Faserverbindungen pro Steckverbinder aneinandergereiht werden
- Die minimale Anzahl der Schnapplaschen je Verriegelungsmittel hält die Ein- bzw. Aussteckkraft niedrig.

### BEZUGSZEICHENLISTE

- 10,10',10": optischer Steckverbinder ("backplane connector")
- 10A: Stecker
- 10B: Buchse
- 11: Montagerückwand ("backplane")
- 12: Aussengehäuse (Buchse)
- 12A: Flansch
- 13: Innengehäuse (Buchse)
- 14: Schaltungsplatte
- 15: Körper (Stecker)
- 16: Schutzklappe (Stecker)
- 17,18: faseroptisches Kabel
- 19: Einsteckteil
- 20,25: Schnapplasche
- 21: seitliches Ohr
- 22: Einstecköffnung
- 23: Steuerbahn
- 24,26: Verriegelungsabsatz
- 27,28: Anschrägung

## Patentansprüche

1. Optischer Steckverbinder (10) zum lösbaren Verbinden einer Schaltungsplatte (14) mit einer Montagerückwand (11), welcher Steckverbinder (10) wenigstens einen Stecker (10A) und wenigstens eine Buchse (10B) umfasst, wobei die Buchse (10B) oder der Stecker (10A) ein Aussengehäuse (12) und ein Innengehäuse (13) umfasst, welches Innengehäuse (13) in dem Aussengehäuse (12) in Steckrichtung verschiebbar gelagert und mittels erster Verriegelungsmittel (25, 26) gegen ein Verschieben innerhalb des Aussengehäuses (12) gesichert ist, und wobei dem Stecker (10A) oder der Buchse (10B) Entriegelungsmittel (20) zugeordnet sind, welche beim vollständigen Einstecken des Steckers (10A) in die Buchse (10B) die ersten Verriegelungsmittel (25, 26) entriegeln, und wobei dem Stecker (10A) oder der Buchse (10B) zweite Verriegelungsmittel (20, 21, 23, 24) zugeordnet sind, welche beim vollständigen Einstecken des Steckers (10A) den Stecker (10A) und die Buchse (10B) untereinander verriegeln, wobei die zweiten Verriegelungsmittel (20, 21, 23, 24) so ausgebildet sind, dass sie zugleich als Entriegelungsmittel für die ersten Verriegelungsmittel (25, 26) dienen, und die ersten Verriegelungsmittel (25, 26) eine am Innengehäuse (13) angebrachte erste Schnapplasche (25) umfassen, welche sich in Steckrichtung erstreckt und im verriegelten Zustand hinter einen am Aussengehäuse (12) angeordneten ersten Verriegelungsabsatz (26) einschnappt, und die Buchse (10B) ein Aussengehäuse (12) und ein Innengehäuse (13) umfasst, welches Innengehäuse (13) in dem Aussengehäuse (12) in Steckrichtung verschiebbar gelagert und mittels der ersten Verriegelungsmittel (25, 26) gegen ein Verschieben innerhalb des Aussengehäuses (12) gesichert ist, **dadurch gekennzeichnet, dass** der wenigstens eine Stecker (10A) einen Körper (15) mit einem Einsteckteil (19) umfasst, dass die zweiten Verriegelungsmittel (20, 21, 23, 24) eine an dem Körper (15) angebrachte zweite Schnapplasche (20) umfassen, welche sich in Steckrichtung erstreckt und im verriegelten Zustand hinter einen am Innengehäuse (13) der Buchse (10B) angeordneten zweiten Verriegelungsabsatz (24) einschnappt, und dass die beiden Schnapplaschen (20, 25) so ausgebildet und einander zugeordnet sind, dass die zweite Schnapplasche (20) beim Einstecken des Steckers (10A) zunächst hinter dem zweiten Verriegelungsabsatz (24) einschnappt und anschliessend die erste Schnapplasche (25) über den ersten Verriegelungsabsatz (26) anhebt und entriegelt.

2. Steckverbinder nach Anspruch 1, **dadurch gekennzeichnet, dass** die ersten und zweiten Verriegelungsmittel (25, 26 bzw. 20, 21, 23, 24) auf der der Schaltungsplatte (14) zu oder abgewandten Seite des Steckverbinders (10) angeordnet sind.

3. Steckverbinder nach Anspruch 1, **dadurch gekennzeichnet, dass** die beiden Schnapplaschen (20, 25) an ihren freien Enden zueinander parallel verlaufende Anschrägungen (27, 28) aufweisen, welche beim Aufeinandertreffen der Schnapplaschen (20, 25) beim Einstecken des Steckers (10A) eine Auslenkung der ersten Schnapplasche (25) quer zur Steckrichtung bewirken.

4. Steckverbinder nach einem der Ansprüche 1 bis 3, **dadurch gekennzeichnet, dass** zum Verriegeln und Entriegeln der zweiten Schnapplasche (20) auf der Höhe des zweiten Verriegelungsabsatzes (24) am Aussengehäuse (12) eine Steuerbahn (23) vorgesehen ist, auf welcher die zweite Schnapplasche (20) mit ihrem freien Ende beim Einstecken und Herausziehen des Steckers (10A) entlanggleitet und über den zweiten Verriegelungsabsatz (24) gehoben wird.

5. Steckverbinder nach Anspruch 4, **dadurch gekennzeichnet, dass** zum Abtasten der Steuerbahn (23) am freien Ende der zweiten Schnapplasche (20) seitliche Ohren (21) angebracht sind.

6. Steckverbinder nach einem der Ansprüche 1 bis 5, **dadurch gekennzeichnet, dass** innerhalb des Steckverbinders (10) eine Mehrzahl von faseroptischen Kabeln (17, 18) verbunden werden.

7. Steckverbinder nach einem der Ansprüche 1 bis 6, **dadurch gekennzeichnet, dass** die Buchse (10B) für die Montage an einer Montagerückwand (11) und der Stecker (10A) für die Montage auf einer Schaltungsplatte (14) vorgesehen ist.

8. Steckverbinder nach Anspruch 7, **dadurch gekennzeichnet, dass** das Aussengehäuse (12) mit einem Flansch (12A) zur Befestigung an der Montagerückwand (11) ausgestattet ist.

## Claims

1. Optical backplane connector (10) for detachably connecting a printed circuit board (14) to a mounting backplane (11), which backplane connector (10) comprises at least one plug (10A) and at least one socket (10B), the socket (10B) or the plug (10A) comprising an outer housing (12) and an inner housing (13), which inner housing (13) can be mounted displaceably in the plugging direction in the outer housing (12) and is secured with the aid of a first locking means (25, 26) against displacement inside the outer housing (12), and the plug (10A) or the socket (10B) being assigned unlocking means (20) which unlock the first locking means (25, 26) upon complete insertion of the plug (10A) into the socket (10B), and the plug (10A) or the socket (10B) being assigned second locking means (20, 21, 23, 24) which interlock the plug (10A) and the socket (10B) upon complete insertion of the plug (10A), the second locking means (20, 21, 23, 24) being designed such that they serve simultaneously as unlocking means for the first locking means (25, 26), and the first locking means (25, 26) comprising a first snap lug (25), which is fitted on the inner housing (13), extends in the plugging direction and, in the locked state, snaps in behind a first locking step (26) arranged on the outer housing (12), and the socket (10B) comprising an outer housing (12) and an inner housing (13), which inner housing (13) is mounted displaceably in the plugging direction in the outer housing (12), and secured against displacement inside the outer housing (12) with the aid of the first locking means (25, 26), **characterized in that** the at least one plug (10A) comprises a body (15) with an insert part (19), **in that** the second locking means (20, 21, 23, 24) comprise a second snap lug (20), which is fitted on the body (15), extends in the plugging direction and, in the locked state, snaps in behind a second locking step (24) arranged on the inner housing (13) of the socket (10B), and **in that** the two snap lugs (20, 25) are designed and assigned to one another such that, upon insertion of the plug (10A), the second snap lug (20) firstly snaps in behind the second locking step (24), and subsequently lifts the first snap lug (25) above the first locking step (26) and unlocks it.

2. Backplane connector according to Claim 1, **characterized in that** the first and second locking means (25, 26 or 20, 21, 23, 24) are arranged on the side of the backplane connector (10) facing or averted from the circuit board (14).

3. Backplane connector according to Claim 1, **characterized in that** the two snap lugs (20, 25) have at their free ends bevels (27, 28) which run parallel to one another and effect a deflection of the first snap lug (25) transverse to the plugging direction when the snap lugs (20, 25) meet one another upon insertion of the plug (10A).

4. Backplane connector according to one of Claims 1 to 3, **characterized in that** provided for the purpose of locking and unlocking the second snap lug (20) at the level of the second locking step (24) on the outer housing (12) is a control track (23) on which the second snap lug (20) slides along with its free end during insertion and withdrawal of the plug (20) and is lifted over the second locking step (24).

5. Backplane connector according to Claim 4, **characterized in that** lateral ears (21) are fitted at the free end of the second snap lug (20) for the purpose of following the control track (23).

6. Backplane connector according to one of Claims 1 to 5, **characterized in that** a plurality of fibre optic cables (17, 18) are connected inside the backplane connector (10).

7. Backplane connector according to one of Claims 1 to 6, **characterized in that** the socket (10B) is provided for mounting on a mounting backplane (11), and the plug (10A) is provided for mounting on a circuit board (14).

8. Backplane connector according to Claim 7, **characterized in that** the outer housing (12) is equipped with a flange (12A) for fastening on the mounting backplane (11).

## Revendications

1. Connecteur à fiche optique (10) pour la connexion desserrable d'une plaquette de circuit (14) à une paroi arrière de montage (11), lequel connecteur à fiche (10) comprend au moins une fiche (10A) et au moins une prise (10B), la prise (10B) ou la fiche (10A) comprenant un boîtier extérieur (12) et un boîtier intérieur (13), lequel boîtier intérieur (13) est monté de manière à pouvoir coulisser dans le boîtier extérieur (12) dans la direction d'enfichage et étant fixé par le biais de premiers moyens de verrouillage (25, 26) contre tout coulissement à l'intérieur du boîtier extérieur (12), et des moyens de déverrouillage (20) étant associés à la fiche (10A) ou à la prise (10B), lesquels, lors d'un enfichage à fond de la fiche (10A) dans la prise (10B), déverrouillent les premiers moyens de verrouillage (25, 26) et des deuxièmes moyens de verrouillage (20, 21, 23, 24) étant associés à la fiche (10A) ou à la prise (10B), lesquels, lors de l'enfichage à fond de la fiche (10A), verrouillent l'une à l'autre la fiche (10A) et la prise (10B), les deuxièmes moyens de verrouillage (20, 21, 23, 24) étant réalisés de telle sorte qu'ils servent à la fois de moyens de déverrouillage pour les premiers moyens de verrouillage (25, 26), et les premiers moyens de verrouillage (25, 26) comprenant une première languette d'encliquetage (25) montée sur le boîtier intérieur (13), laquelle s'étend dans la direction d'enfichage et s'encliquette dans l'état verrouillé derrière un premier épaulement de verrouillage (26) disposé sur le boîtier extérieur (12), et la prise (10B) comprenant un boîtier extérieur (12) et un boîtier intérieur (13), lequel boîtier intérieur (13) est monté de manière à pouvoir coulisser dans le boîtier extérieur (12) dans la direction d'enfichage et est fixé par le biais des premiers moyens de verrouillage (25, 26) contre tout coulissement dans le boîtier extérieur (12), **caractérisé en ce que** l'au moins une fiche (10A) comprend un corps (15) avec une partie d'enfichage (19), **en ce que** les deuxièmes moyens de verrouillage (20, 21, 23, 24) comprennent une deuxième languette d'encliquetage (20) montée sur le corps (15), laquelle s'étend dans la direction d'enfichage et s'encliquette, dans l'état verrouillé, derrière un deuxième épaulement de verrouillage (24) disposé sur le boîtier intérieur (13) de la prise (10B), et **en ce que** les deux languettes d'encliquetage (20, 25) sont réalisées et sont associées l'une à l'autre de telle sorte que la deuxième languette d'encliquetage (20), lors de l'enfichage de la fiche (10A), s'encliquette d'abord derrière le deuxième épaulement de verrouillage (24) puis soulève la première languette d'encliquetage (25) au-dessus du premier épaulement de verrouillage (26) et la déverrouille.

2. Connecteur à fiche selon la revendication 1, **caractérisé en ce que** les premiers et deuxièmes moyens de verrouillage (25, 26, respectivement 20, 21, 23, 24) sont disposés du côté du connecteur à fiche (10) tourné vers la plaquette de circuit (14) ou opposé à celle-ci.

3. Connecteur à fiche selon la revendication 1, **caractérisé en ce que** les deux languettes d'encliquetage (20, 25) présentent, à leurs extrémités libres, des parties biseautées (27, 28) s'étendant parallèlement l'une à l'autre, lesquelles, lors de la convergence des languettes d'encliquetage (20, 25) lors de l'enfichage de la fiche (10A), provoquent une déviation de la première languette d'encliquetage (25) transversalement à la direction d'enfichage.

4. Connecteur à fiche selon l'une quelconque des revendications 1 à 3, **caractérisé en ce que** pour le verrouillage et le déverrouillage de la deuxième languette d'encliquetage (20), on prévoit à la hauteur du deuxième épaulement de verrouillage (24) sur le boîtier extérieur (12) une piste de commande (23) le long de laquelle la deuxième languette de verrouillage (20) glisse avec son extrémité libre lors de l'enfichage et de la sortie de la fiche (10A) et est soulevée par-dessus le deuxième épaulement de verrouillage (24).

5. Connecteur à fiche selon la revendication 4, **caractérisé en ce que** pour la détection de la piste de commande (23), des oreillettes latérales (21) sont montées sur l'extrémité libre de la deuxième languette d'encliquetage (20).

6. Connecteur à fiche selon l'une quelconque des revendications 1 à 5, **caractérisé en ce qu'**à l'intérieur du connecteur à fiche (10) sont connectés une pluralité de câbles à fibres optiques (17, 18).

7. Connecteur à fiche selon l'une quelconque des revendications 1 à 6, **caractérisé en ce que** la prise (10B) est prévue pour le montage sur une paroi arrière de montage (11) et la fiche (10A) pour le montage sur une plaquette de circuit (14).

8. Connecteur à fiche selon la revendication 7, **caractérisé en ce que** le boîtier extérieur (12) est équipé d'une bride (12A) pour la fixation sur la paroi arrière de montage (11).
